(19)

Europäisches
Patentamt

European
Patent Office

Office européen
des brevets

(11) **EP 4 530 670 A1**

(12) **EUROPEAN PATENT APPLICATION**

(43) Date of publication:
**02.04.2025 Bulletin 2025/14**

(21) Application number: **23200857.3**

(22) Date of filing: **29.09.2023**

(51) International Patent Classification (IPC):
**G01S 13/536** (2006.01)    **G01S 13/72** (2006.01)
**G01S 13/89** (2006.01)    **G01S 13/931** (2020.01)
**G01S 7/02** (2006.01)    G01S 13/93 (2020.01)

(52) Cooperative Patent Classification (CPC):
**G01S 13/931; G01S 7/023; G01S 13/723;**
**G01S 13/89;** G01S 13/536; G01S 13/93;
G01S 2013/932

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **GM Cruise Holdings LLC**
**San Francisco CA 94103 (US)**

(72) Inventor: **SANSON, Jessica Bartholdy**
**85521 Ottobrunn (DE)**

(74) Representative: **Berkenbrink, Kai-Oliver et al**
**Patentanwälte Becker & Müller**
**Turmstrasse 22**
**40878 Ratingen (DE)**

(54) **RADAR FREE SPACE MAPPING**

(57)    A radar system comprises a radar sensor and circuitry configured to perform acts comprising receiving radar sensor data from the radar sensor and detecting static objects in the radar sensor data. The acts further comprise calculating cell parameters related to the static objects for a given radar cell, the cell parameters including a minimum residual velocity value for a static object detection. The acts also comprise generating a 2D cell map grid representing 3D radar cells including the given radar cell and comparing the calculated cell parameters to respective threshold values. Additionally, the acts comprise assigning weight scores to the cell parameters based on the threshold comparison and summing the weight scores assigned to the cell parameters to generate a combined score. The acts also comprise comparing the combined score to a probability threshold and outputting an indication that the cell is occupied or not occupied.

**FIG. 1**

EP 4 530 670 A1

**Description**

BACKGROUND

Autonomous or assisted driving strategies have been facilitated through sensing an environment around a vehicle. Radar sensors are conventionally used in connection with detecting and classifying objects in an environment; advantages of radar over other types of sensors (such as cameras or lidar) include robustness in regard to lighting and weather conditions. Often, radar sensors are deployed with cameras and/or lidar sensors to provide different modes of detection and redundancy. In certain scenarios, performance of lidar and/or cameras is negatively impacted by environmental features, such as fog, rain, snow, bright sunlight, lack of adequate light, etc. Accordingly, in these scenarios, radar is relied heavily upon to detect and classify objects in the environment, while lidar and camera sensors are less heavily relied upon.

Conventionally, a radar sensor generates a radar tensor (which can also be referred to as a point cloud), and the radar tensor is processed to detect and classify objects in the environment. For instance, the radar tensor includes power measurements generated by the radar sensor along different dimensions, such as Doppler, range, azimuth, and elevation. The radar tensor is then further processed to detect, classify, and track objects in the scene over time. As radar systems increase in popularity and are included in more and more vehicles, interference may become increasingly problematic (where a radar signal emitted from one vehicle may be detected by a radar system of another vehicle).

Egomotion refers to the motion of a radar sensor or system as it travels through an operating environment. Radar systems can measure relative velocity, i.e., the velocity of an object relative to the radar sensor, and then compensate for ego velocity to obtain a true velocity of the object. However, events like vehicle vibration and incorrectly calibrated sensor position information can lead to multipath signal propagation that can detrimentally affect the egomotion compensation. For instance when compensating for egomotion, radar sensor position is typically translated to the center of the vehicle on which the radar sensor is deployed. If the sensor position is not accurately calibrated, the translation will not be accurate, which can lead to inaccurate velocity estimation. While conventional approaches allow for objects to be detected, classified, and tracked over time, these approaches have not satisfactorily addressed problems created by multipath signal propagation in radar systems.

SUMMARY

The following is a brief summary of subject matter that is described in greater detail herein. This summary is not intended to be limiting as to the scope of the claims.

Described herein are various technologies relating to radar systems, and more specifically, radar systems employed in autonomous vehicles, aircrafts, watercrafts, and the like. With more particularity, various technologies described herein facilitate using radar to detect free space in an environment in which an autonomous vehicle is operating.

Free space mapping involves distinguishing between areas that are free of obstacles and those that are not. The radar sensors scan the environment to gather data, which is processed to create a representation of the space around the vehicle. Free space and occupancy grid mapping is a technique in robotics and autonomous systems for interpreting a surrounding environment. By leveraging sensors, it generates a grid-based model of the environment, designating each grid cell as either occupied or unoccupied. This data is important for navigational planning, evading obstacles, and maintaining overall situational cognizance in autonomous vehicles, drones, and a variety of robotic systems.

Radar sensors are particularly effective for free space estimation in scenarios where other sensory mechanisms, like cameras or LiDAR, may struggle, such as in low-light or dust-filled environments. However, the use of conventional radar is constrained in such applications by false targets arising from multipath or noise interference. Although moving targets can be properly classified as false or true through tracking, correctly classifying stationary detections is notably more challenging.

Described herein is a free space mapping technique premised on a radar-derived point cloud. The described technique calculates the occupancy probability of a cell, considering not only the presence of detections within the cell but also cell parameters such as the count of detections, the radar cross-section (RCS), signal-to-noise ratio (SNR), frame time, and residual velocity (non-zero velocity) of stationary detections. These additional parameters (RCS, SNR, and residual velocity) fortify the algorithm's robustness, enhancing accurate estimation of free space based on radar data.

The cell parameters are compared to respective thresholds, and if they meet the respective threshold conditions, they are assigned a weight. Weights for each cell parameter are added to generate a combined score that is compared to a probability threshold. If the combined score is greater than the probability threshold, the cell is identified as occupied. If the combined score is not greater than the probability threshold, the cell is identified as unoccupied and free for travel.

Using the residual velocity in the cell occupation probability makes the described technique robust against the effects of multipath signal propagation. After egomotion compensation, static detections that have incorrect angle estimation (e.g., due to multipath effects) will have a high residual velocity (non-zero speed). Therefore, a group of points with low SNR and high phase residency has a high probability of being a false detection and can be determined not to increase considerably the probability of occupation of a cell in which the points lie.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

BRIEF DESCRIPTION OF THE DRAWINGS

Fig. 1 is a functional block diagram of an exemplary radar sensor.
Fig. 2 illustrates a more detailed view of the hardware logic component.
Fig. 3 shows another example of a radar sensor unit.
Fig. 4 is a more detailed illustration of the CPU 316.
Fig. 5 shows a plot of velocity vs. azimuth of static detections.
Fig. 6 illustrates a side-by-side comparison of a birds-eye radar view of a scene that is monitored by a radar system.
Fig. 7 illustrates an exemplary methodology relating to identifying free space in a radar-monitored environment for autonomous vehicle travel.
Fig. 8 is a functional block diagram of an exemplary AV.
Fig. 9 is an exemplary computing system.

DETAILED DESCRIPTION

Various technologies pertaining to automated vehicle (and other) radar systems are described herein. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

Further, as used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices. Further, as used herein, the term "exemplary" is intended to mean serving as an illustration or example of something and is not intended to indicate a preference.

Free space mapping contributes to path planning, which is the process of determining the optimal path for an autonomous vehicle to follow. Once the free space is identified, the autonomous driving system can generate a path that navigates through the free space, while avoiding obstacles and adhering to traffic rules. This path planning is often performed in real-time as the vehicle moves and new sensor data is collected.

Radar can be a useful technology used in autonomous vehicles for free space mapping. Unlike cameras and LiDAR, radar operates effectively in adverse weather conditions such as fog. However, one of the significant challenges with using radar for free space mapping in autonomous driving is the issue of false detections due to the multipath effect, which occurs when a radar signal reaches a receive antenna over two or more paths and can cause signal interference, distortion, phase-shifting, etc.

The problem of multipath reflections can be particularly challenging in urban environments with tall buildings and in complex traffic scenarios with multiple objects in close proximity. These reflections can lead to inaccurate free space mapping, causing the vehicle's perception system to make wrong decisions that could potentially compromise safety.

The multipath effects of moving objects can be mitigated through tracking algorithms. However, static targets pose a more significant challenge. In order to mitigate the effects caused by multipath reflections of static objects (buildings, signs, road, etc.) in estimating free space mapping using radar, the described techniques make use of unique information provided by radars, including the residual velocity of each static detection after egomotion compensation.

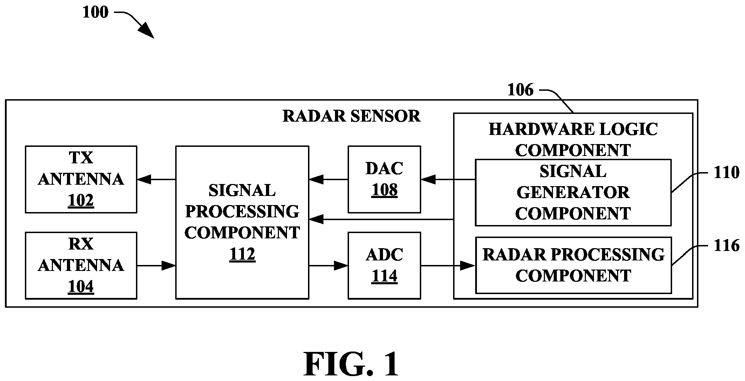

With reference now to Fig. 1, an exemplary radar sensor 100 is illustrated, in which various features, circuits, etc. described herein can be employed. The radar sensor 100 includes a transmit antenna 102, a receive antenna 104, and a hardware logic component 106. Briefly, the hardware logic component 106 is configured to prepare radar signals that are transmitted by the transmit antenna 102, and to compute target solutions indicating estimated positions and/or velocities of objects based upon radar returns and/or other radar signals received by the receive antenna 104. In exemplary embodiments, various components of the radar sensor 100 can be integrated as a same system-on-a-chip (SoC). In various embodiments, the radar sensor 100 can be employed on a vehicle, such as a land vehicle, an aircraft, to identify positions and velocities of objects in the operational environment of the vehicle.

The radar sensor 100 further comprises one or more DACs 108. The hardware logic component 106 comprises a signal generator component 110 that prepares radar signals for transmission by way of the transmit antenna 102. The signal generator component 110 is configured to control the DAC 108 to cause the DAC 108 to generate an analog radar signal for transmission by the transmit antenna 102. In other words, the signal generator component 110 generates digital values that, when received by the DAC 108, cause the DAC 108 to output an analog radar signal having various desired signal characteristics. Hence, the radar sensor 100 is configured as a digitally modulated radar sensor, wherein characteristics of radar signals output by the transmit antenna 102 are digitally controlled by the signal generator component 110 of the hardware logic component 106. For example, the signal generator component 110 can be configured to control the DAC 108 such that the radar sensor operates as a phase modulated continuous wave (PMCW) radar sensor.

The radar sensor 100 further includes an analog signal processing component 112. The signal processing component 112 is generally configured to perform various analog signal processing operations on analog signals that are to be output by the transmit antenna 102 and/or that are received by the receive antenna 104. By way of example, and not limitation, the signal processing component 112 can amplify a radar signal output by the DAC 108 to increase the power of the radar signal prior to transmission by way of the transmit antenna 102. In a further example, the signal processing component 112 can be configured to mix a radar signal output by the DAC 108 with a carrier signal to shift a center frequency of the radar signal. The signal processing component 112 can include any of various components that are configured to perform these various functions. For example, the signal processing component 112 can include mixers, amplifiers, filters, or the like. Functionality of the signal processing component 112 and its constituent components can be controlled by the hardware logic component 106. The transmit antenna 102 receives processed radar signals from the signal processing component 112 and emits the radar signals into an operational environment of the radar sensor 100.

The receive antenna 104 receives radar returns from the operational environment. In exemplary embodiments, the radar returns received by the receive antenna 104 comprise reflections, from objects in the operational environment of the sensor 100, of radar signals emitted by the transmit antenna 102. It is to be understood that the radar returns received by the receive antenna 104 can further include reflections of radar signals emitted by other radar emitters that are active within the operational environment of the radar sensor 100. Responsive to receipt of radar returns from the operational environment of the sensor 100, the receive antenna 104 outputs an electrical signal that is indicative of the received radar returns. This electrical signal is referred to herein as a radar signal and is transmitted along one or more transmission lines in the radar sensor 100, as distinct from radar returns that are received by the receive antenna 104 as radiated signals propagating through air or free space in the operational environment of the radar sensor 100.

The signal processing component 112 receives a radar signal from the receive antenna 104. The signal processing component 112 is configured to perform various analog signal processing operations over radar signals received from the receive antenna 104. By way of example, and not limitation, the signal processing component 112 can perform various mixing, filtering, and amplification operations on radar signals output by the receive antenna 104. The signal processing component 112 can be configured to perform various of these signal processing operations (e.g., mixing) based further upon a radar signal transmitted by the transmit antenna 102.

The radar sensor 100 further comprises one or more ADCs 114 that receives a processed radar signal from the signal processing component 112. The ADC 114 digitally samples the radar signal and outputs digital values that are indicative of amplitude of the radar signal over time. These digital values are collectively referred to herein as radar data. The radar data output by the ADC 114 are indicative of the radar returns received by the receive antenna 104.

The hardware logic component 106 receives the radar data from the ADC 114. The hardware logic component 106 further comprises a radar processing component 116. The radar processing component 116 is configured to compute positions and/or velocities of targets in the operational environment of the radar sensor 100 based upon the radar data. In a non-limiting example, the radar processing component 116 can compute a range, a bearing, and/or a velocity of a target in the operational environment of the sensor 100 based upon the radar data.

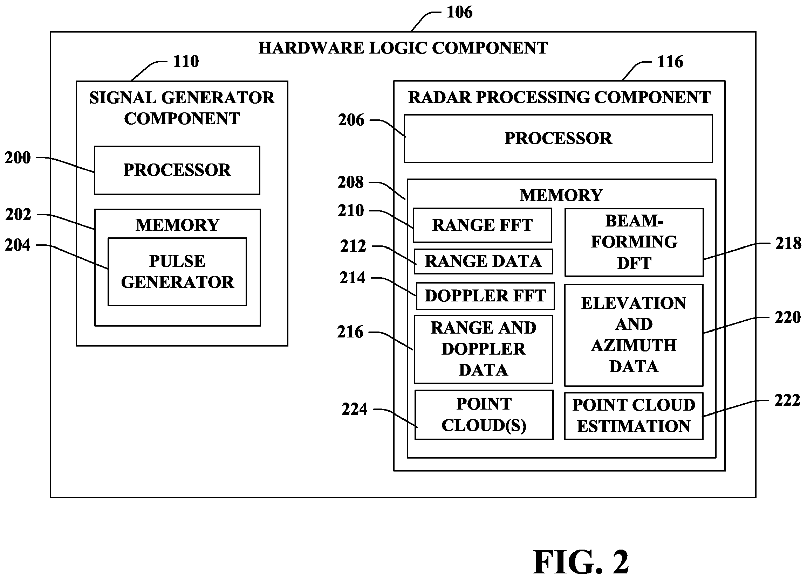

With reference now to Fig. 2, a more detailed view of the hardware logic component 106 is illustrated. The hardware logic component 106 comprises the signal generator component 110 and the radar processing component 116, as discussed with regard to Fig. 1. The signal generator component 110 comprises a processor 200 and a memory 202 configured to provide certain functionality as described herein. For example, the memory 202 can store computer-executable instructions that, when executed by the processor 200, cause the signal generator component 110 to perform certain acts. The memory 202 comprises a ramp/pulse generator component 204 that generates ramps/pulses (depending on the type of radar system) for transmission. In one embodiment, the ramp/pulse generator component 204 performs time division multiplexing and/or frequency division multiplexing on the signals to be transmitted.

The radar processing component 116 comprises a processor 206 and a memory 208 configured to provide certain functionality as described herein. For example, the memory 208 can store computer executable instructions that, when executed by the processor 206, cause the radar processing component 116 to perform certain acts. The memory 208 comprises a range fast Fourier transform (FFT) component 210 that is executed on a digitized signal received from an ADC, such as the ADC 114 of Fig. 1, to generate range data values 212 for objects detected in a received radar return. A Doppler FFT 214 is executed on the range values to generate range and Doppler data values 216. A discrete Fourier transform (DFT) 218 is then executed on the range and Doppler data values to generate elevation and azimuth data values 220. A point cloud estimation component 222 is executed to generate one or more multi-dimensional point clouds (radar tensors) 224 representing at least the range data values 212, the range and Doppler data values 216, and the elevation and azimuth data values 220.

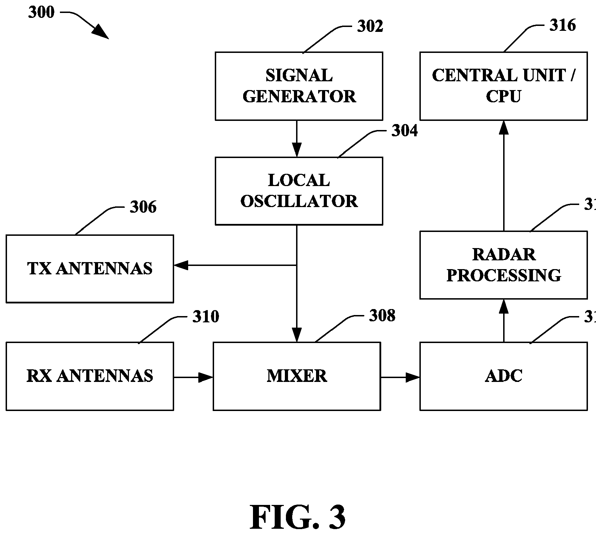

Fig. 3 shows another example of a radar sensor unit 300. In the example of Fig. 3, signal processing at the radar sensor terminates with generation of the point clouds, which are then transmitted to a central processing unit or computer where they are processed further. The sensor 300 comprises a signal generator 302 that provides a signal to a local oscillator 304. The local oscillator 304 adjusts the signal for transmission via one or more transmit antennas 306. The local oscillator 304 also provides the transmit signal to a mixer 308, which combines the transmit signal with signals that have been reflected by an object and received by one or more receive antennas 310. The combined signal is then provided by the mixer 308 to an ADC 312, which digitizes the combined signal and provides the digitized signal to a radar processing component 314.

The radar processing unit 314 performs various acts on the digitized signal and provides functionality similar or identical to the functionality provided by the radar processing component 116 of the hardware logic component 106 (see, e.g., Figs. 1 and 2). The radar processing component 314 generates one or more multi-dimensional point clouds, which are then transmitted to a central processing unit (CPU) 316 (also referred to herein as a radar analysis system) for additional processing.

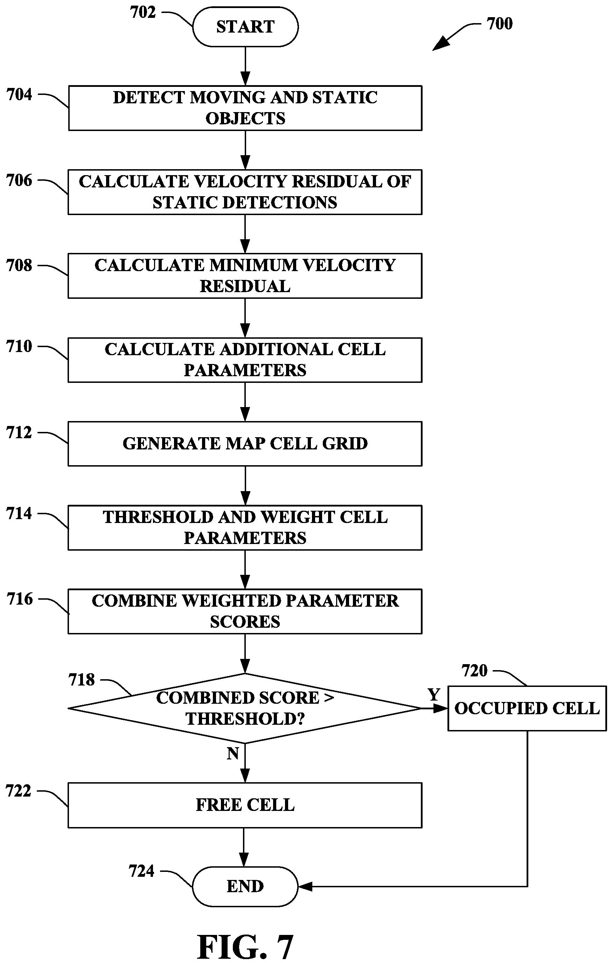

In one embodiment, the central processing unit 316 executes the method of Fig. 7. In another embodiment, the central processing unit 316 receives raw radar data from a radar sensor and processes the raw data to generate one or more point clouds and otherwise provide the functionality described herein.

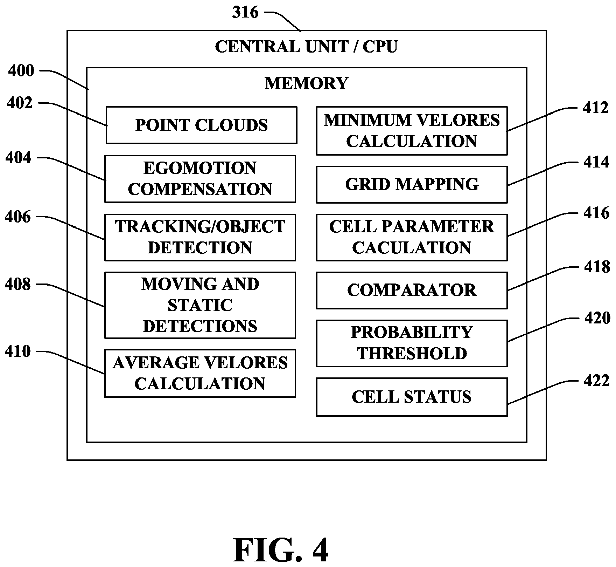

Fig. 4 is a more detailed illustration of the CPU 316. The CPU 316 comprises a memory 400 that stores instructions that are executed by the CPU (e.g., one or more processors) and data such as point clouds 402 received from a radar sensor and/or generated by the CPU from raw sensor data. An ego motion compensation component 404 compensates for the velocity of the radar system in which the CPU 316 is employed relative to objects detected by a tracking/object detection component 406. Moving and static detection information 408 is stored in the memory 400.

According to an aspect, the CPU 316 performs free space mapping, where the vehicle's surroundings are represented as a grid of cells. Each cell can be classified as "occupied", "free", or "unknown" based on the sensor data. The occupancy grid for moving objects is estimated by the tracking/object detection component 406. The CPU 316 calculates a probabilistic value to account for the uncertainty in sensor data (e.g., point clouds 402, raw sensor data, etc.) for the static detections, using parameters such as SNR, RCS, number of detections in each cell and residual velocity of static detections. The residual velocity is a valuable parameter when mitigating the effect of multipath propagation on estimated free space.

Radar systems have the ability to measure the relative velocity of objects (the difference between the velocity of the radar sensor itself and the object). The velocity of static objects in the scene monitored by the radar sensor is approximately the opposite velocity of the radar sensor itself. After egomotion compensation, the static detections have a velocity of approximately 0 m/s.

The radial velocity of a static detection measured by the tracking/object detection component 406 can be decomposed by the tracking/object detection component 406 (or by the CPU 316 itself) into three Cartesian components with the following equation:

$$Vr = Vx \cos(\varphi) \sin(\theta) + Vy \sin(\varphi) \sin(\theta) + Vz \cos(\theta)$$

where: $Vr$ is the radial velocity measured by the radar; $\varphi$ is the azimuth angle measured by the radar; $\theta$ is the elevation angle measured by the radar; and $Vx, Vy$ and $Vz$ are the 3-dimensional components in cartesian coordinates of the radial velocity (which are unknown by the radar).

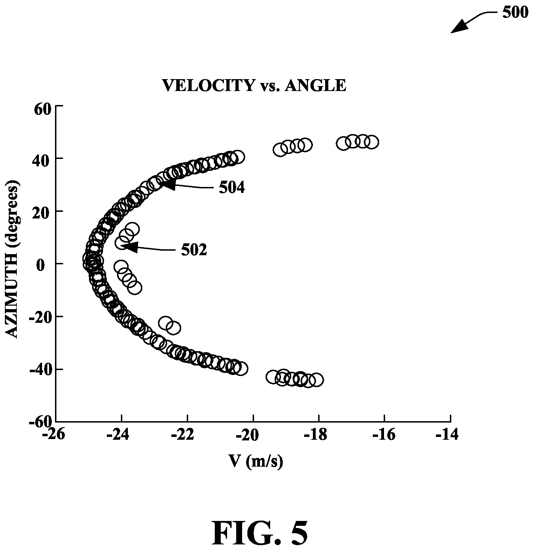

However, due to limitations in the accuracy of the measured velocity and angle, and motion estimations, the velocity of static detections may present a residual velocity such that it may not be completely zero. In the case of multipath targets, this effect is amplified. A detection coming from a signal that has undergone multipath propagation can have an estimated angle different from the real angle of the object. Soon after compensating for the motion speed of the vehicle (egomotion compensation), this detection can present a large velocity phase residual. This effect can be seen in Fig. 5.

After the ego motion compensation component 404 compensates for the egomotion of the detections, the tracking/object detection component 406 calculates the moving object/target detections and static object detections 408. When movement of the vehicle is compensated on a frame by frame basis, static detections for multiple frames can be accumulated.

For the static detections in a given cell, an average residual velocity (VeloResAverage) calculation component 410 calculates the mean of the residual velocity of the static detections in a cell such that:

$$VeloResAverage = mean(abs(VeloStaticDetection))$$

That is, the average residual velocity is calculated as the mean of the absolute values of the static detection velocities across frames. The residual velocity of the detections is calculated in relation to the average residual velocity in order to compensate for consistent errors in velocity related to the egomotion estimation (e.g., when radar sensor position is not properly calibrated).

Minimum residual velocity is calculated by a minimum residual velocity calculation component 412 such that:

$$VeloRes= min(abs(VeloStaticDetection) -$$

$$VeloResAverage,abs(VeloStaticDetection)\,).$$

That is, a minimum residual velocity (VeloRes) is calculated as the difference between the lowest (minimum) absolute value of the velocity detected for a given static object (VeloStaticDetection) and the calculated average residual velocity (VeloResAverage).

A grid mapping component 414 generates a 2D grid map of cells in the scene being monitored by the radar system, and the CPU 316 analyzes cells in the grid map and calculates a probability of occupation for each cell. The grid map is divided into cells of defined size (cell Size = [x y] grid size), and detections outside of the z x y interval are filtered out (zInterval xInterval yInterval represent the interval of free space), where:

$$zInterval = [zmin\ zmax]\ Interval\ of\ z\ for\ freeSpace$$

$$xInterval = [xmin\ xmax]\ Interval\ of\ x\ for\ freeSpace$$

$$yInterval = [ymin\ ymax]\ Interval\ of\ y\ for\ freeSpace$$

A cell parameter calculation component 416 calculates additional cell parameters (i.e., in addition to the minimum residual velocity parameter) including but not limited to the number of static detections in the a given cell, maximum SNR, maximum RCS, minimum frame time of the detections in the cell, etc. The cell parameter calculation component 416 also applies different weights to each parameter to estimate the probability of occupancy. In the example below, equal weights for each parameter are considered. For each parameter, a comparator component 418 determines whether the cell has the required minimum combined score to qualify as occupied.

For a given cell, with weights w1-w5 initialized to 0:

```
Start w1=w2=w3=w4=w5= 0
If nPointsCell ≥ nPointsCellScore: w1= 0.2
If snrCell ≥ snrCellScore: w2= 0.2
If rcsCell ≥ rcsCellScore: w3= 0.2
If frameTimeCell ≤ FrameTimeScore: w4= 0.2
If veloResCell ≤ veloResCellScore : w5= 0.2
```

where:

"Score" represents a threshold value for its respective parameter;

nPointsCell is the number of detections in each cell of the map;
snrCell is the maximum SNR of the detections in each cell;
rcsCell is the maximum RCS of the detections of each cell;
frameTimeCell is the minimum frame time of detections in each cell;
FrameTimeScore is [ 0 1 2 3...N frames], where 0 is the last (newest) frame.
and
veloResCell is the minimum residual velocity of the detections in each cell.

The cell parameter calculation component 416 combines (e.g., adds, sums, etc.) the calculated weights to generate a combined score (Sum(w)), and the comparator 418 compares the combined score to a probability threshold 420 (scoreFilter) determine whether to consider a cell occupied or not and outputs a cell status 422 for the given cell to an autonomous vehicle control system (e.g., control system 826, Fig.). For example,

$$occupiedCell = Sum(w) > scoreFilter$$

where scoreFilter is the minimum combined score to identify a cell as occupied. For the above example, if the probability threshold is set to e.g., 0.5, and three or more of the cell parameters meet their respective threshold conditions, then the cell will be identified as occupied because w (0.6) is greater than the probability threshold of 0.5. If fewer than three of the parameters meet their respective threshold conditions, then the cell will be identified as unoccupied or free because Sum(w) is not greater than the probability threshold (scoreFilter).

According to an example, using the various point clouds and information stored in the memory 400, the CPU 316 receives object detection information from the radar sensor, applies ego motion compensation, and classifies the moving object and the static object detections. For the moving objects, the tracking/object detection component is used to determine whether there are moving objects in a given cell. For the static detections, the described technique is employed to estimate residual velocity of the static objects. In some cases, there may be a consistent offset in the residual velocity across multiple static objects due to an error in the calibration of the position of the sensor on the vehicle. After ego motion compensation, if there are errors in the position of the sensor the estimated velocity of these static object detections will not be 0. Rather there will be a residual velocity because the sensor position was incorrectly estimated.

The CPU 316 determines the average residual velocity for static detections within a cell, and then subtracts the average residual velocity from the measured velocity of the static object to normalize the velocity value around 0. The CPU 316 can then select the best data for each detection by selecting the value that is closest to 0 from among the normalized velocity with the residual removed and the velocity that is not normalized (i.e., the actual measured velocity). Additionally, outliers with a high deviation can be filtered out.

The CPU 316 defines the size of the radar cells by dividing them in two dimensions even though the radar view is three-dimensional, so that the CPU 316 generates a quasi 2D grid map of the radar cells using azimuth and range. The CPU 316 calculates parameters for each cell including the number of points detected in the cell, a maximum SNR for the cell, and maximum RCS for the cell, and a minimum frame time for detections in each cell, in addition to the minimum residual velocity calculated by the CPU 316. Each of these five cell parameters is then compared to a respective threshold value and assigned a weight if the threshold condition is satisfied. The CPU 316 then adds the weight values together to generate a combined score that is compared to a probability threshold 420. When the combined score is greater than the probability threshold, the CPU 316 outputs an indication that the cell is occupied. When the combined score is not greater than the probability threshold, the CPU 316 outputs an indication that the cell is not occupied, (i.e., free).

Fig 5 shows a plot 500 of velocity vs. azimuth of the detections classified as static. It can be seen that there are some outliers 502 that do not perfectly follow the velocity vs. angle curve 504. These outliers, after egomotion compensation, will have high velocity phase residuals, as they likely represent a false target detection due to multipath signal propagation.

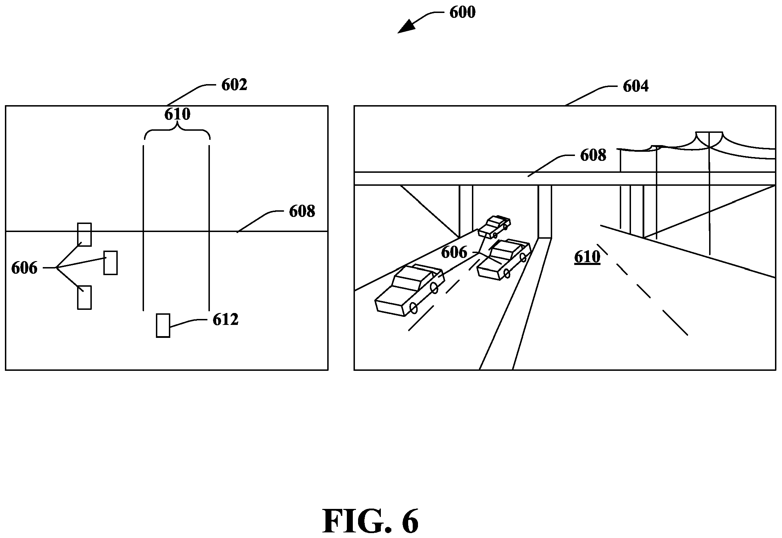

Fig. 6 illustrates a side-by-side comparison 600 of a bird's eye radar view 602 of a scene 604 that is monitored by a radar system on an autonomous vehicle. The radar view 602 shows moving objects 606 (vehicles) as well as static objects 608 such as an overpass. The moving objects 606 and static objects 608 are also visible in the scene 604 corresponding to the radar view 602. A free space 610 is shown extending beneath the overpass and beyond, as calculated by radar system deployed on a host vehicle 612.

Fig. 7 illustrates an exemplary methodology relating to identifying free space in a radar-monitored environment for autonomous vehicle travel. While the methodology is shown and described as being a series of acts that are performed in a sequence, it is to be understood and appreciated that the methodology is not limited by the order of the sequence. For example, some acts can occur in a different order than is described herein. In addition, an act can occur concurrently with another act. Further, in some instances, not all acts may be required to implement a methodology described herein.

Moreover, the acts described herein may be computer-executable instructions that can be implemented by one or more processors and/or stored on a computer-readable medium or media. The computer-executable instructions can include a routine, a sub-routine, programs, a thread of execution, and/or the like. Still further, results of acts of the methodology can be stored in a computer-readable medium, displayed on a display device, and/or the like.

Turning now solely to Fig. 7, a methodology 700 is illustrated for identifying free space in a radar-monitored environment for autonomous vehicle travel, in accordance with aspects described herein. In one embodiment, the method is performed on radar data that has been egomotion compensated. The method begins at 702. At 704, moving and static objects are detected in the radar data. At 706, the average residual velocity of the statics detection is calculated for each frame. At 708, a minimum residual velocity for each frame is calculated as a cell parameter that is used for determining whether a cell is occupied or not.

At 710, additional cell parameters are calculated for each cell in the cell map grid. The additional cell parameters may include without limitation a maximum signal-to-noise ratio for detections in a given cell, a maximum radar cross section value for detections in the given cell, a number of detections or detection count for the given cell, a minimum frame time of detections in the given cell, etc. At 712, a cell map grid is generated, which maps the 3D radar cells in 2D space using range and azimuth information.

At 714, the calculated cell parameters are compared to respective parameter thresholds and weighted according to the comparisons. At 716, the respective weighted parameter scores are summed to generate a combined score for the given cell. At 718, the combined score for the given cell is compared to a probability threshold to determine whether the cell is occupied or free. If the combined score is greater than the probability threshold, then at 720 a determination is made that the cell is occupied. If the combined score is not greater than the probability threshold, then at 722, a determination is made that the cell is a free cell (not occupied) through which an autonomous vehicle on which the radar system is deployed may travel. The method terminates at 724.

In one or more embodiments, the method of Fig. 7 can be executed, performed, etc., by any of the systems, components, processors, etc., of Figs. 1-4, 8, and/or 9, and/or any combination(s) thereof.

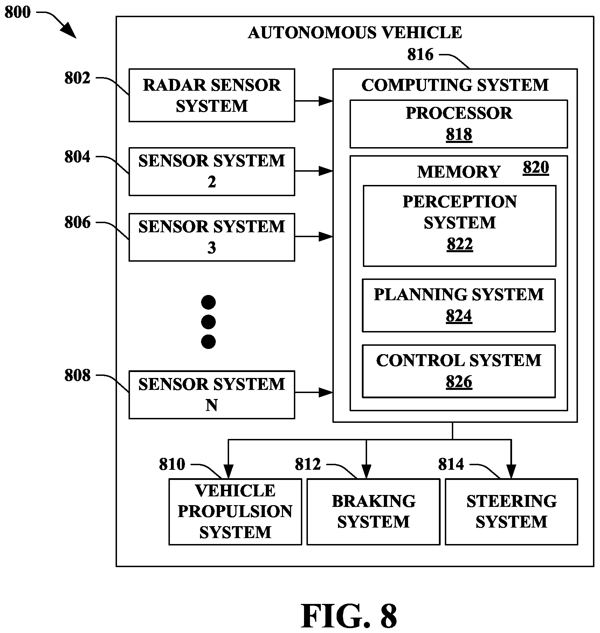

Various technologies described herein are suitable for use in connection with an autonomous vehicle (AV) that employs a radar system to facilitate navigation about roadways. Referring now to Fig. 8, an exemplary AV 800 is illustrated, wherein the AV 800 can navigate about roadways without human conduction based upon sensor signals output by sensor systems of the AV 800. The AV 800 includes a plurality of sensor systems 802-808 (a first sensor system 802 through an Nth sensor system 808). The sensor systems 802-808 may be of different types. For example, the first sensor system 802 is a radar sensor system, the second sensor system 804 may be a LiDaR sensor system, the third sensor system 806 may be a camera (image) system, and the Nth sensor system 808 may be a sonar system. Other exemplary sensor systems include GPS sensor systems, inertial sensor systems, infrared sensor systems, and the like. The various sensor systems 802-808 are arranged about the AV 800. The sensor systems 802-808 are configured to repeatedly (e.g., continuously, or periodically) output sensor data that is representative of objects and conditions in the driving environment of the AV 800.

The AV 800 further includes several mechanical systems that are used to effectuate appropriate motion of the AV 800. For instance, the mechanical systems can include but are not limited to, a vehicle propulsion system 810, a braking system 812, and a steering system 814. The vehicle propulsion system 810 may be an electric engine, an internal combustion engine, or a combination thereof. The braking system 812 can include an engine brake, brake pads, actuators, a regenerative braking system, and/or any other suitable componentry that is configured to assist in decelerating the AV 800. The steering system 814 includes suitable componentry that is configured to control the direction of movement of the AV 800.

The AV 800 additionally comprises a computing system 816 that is in communication with the sensor systems 802-808 and is further in communication with the vehicle propulsion system 810, the braking system 812, and the steering system 814. The computing system 816 includes a processor 818 and memory 820 that includes computer-executable instructions that are executed by the processor 818. In an example, the processor 818 can be or include a graphics processing unit (GPU), a plurality of GPUs, a central processing unit (CPU), a plurality of CPUs, an application-specific integrated circuit (ASIC), a microcontroller, a programmable logic controller (PLC), a field programmable gate array (FPGA), or the like.

The memory 820 comprises a perception system 822, a planning system 824, and a control system 826. Briefly, the perception system 822 is configured to identify the presence of objects and/or characteristics of objects in the driving environment of the AV 800 based upon sensor data output by the sensor systems 802-808. The planning system 824 is configured to plan a route and/or a maneuver of the AV 800 based upon data pertaining to objects in the driving environment that are output by the perception system 822. The control system 826 is configured to control the mechanical systems 812-814 of the AV 800 to effectuate appropriate motion to cause the AV 800 to execute a maneuver planned by the planning system 824.

The perception system 822 is configured to identify objects in proximity to the AV 800 that are captured in sensor signals output by the sensor systems 802-808. By way of example, the perception system 822 can be configured to identify the presence of an object in the driving environment of the AV 800 based upon images generated by a camera system included in the sensor systems 804-808. In another example, the perception system 822 can be configured to determine a presence and position of an object based upon radar data output by the radar sensor system 802. In exemplary embodiments, the radar sensor system 802 can be or include the radar sensor 100 and/or 300. In such embodiments, the perception system 822 can be configured to identify a position of an object in the driving environment of the AV 800 based upon the estimated range output by the radar sensor 100 and/or 300.

The AV 800 can be included in a fleet of AVs that are in communication with a common server computing system. In these embodiments, the server computing system can control the fleet of AVs such that radar sensor systems of AVs operating in a same driving environment (e.g., within line of sight of one another, or within a threshold distance of one another) employ different pulse sequence carrier frequencies. In an exemplary embodiment, a radar sensor system of a first AV can be controlled so as not to transmit pulse sequences having same center frequencies as pulse sequences transmitted by a radar sensor system of a second AV at the same time. In further embodiments, the radar sensor system of the first AV can be controlled to transmit pulse sequences in a different order than a radar sensor system of a second AV. For instance, the radar sensor system of the first AV can be configured to transmit a set of pulse sequences at four different center frequencies A, B, C, and D in an order A, B, C, D. The radar sensor system of the second AV can be configured to transmit pulse sequences using a same set of center frequencies in a frequency order B, A, D, C. Such configurations can mitigate the effects of interference when multiple AVs that employ radar sensor systems are operating in a same driving environment.

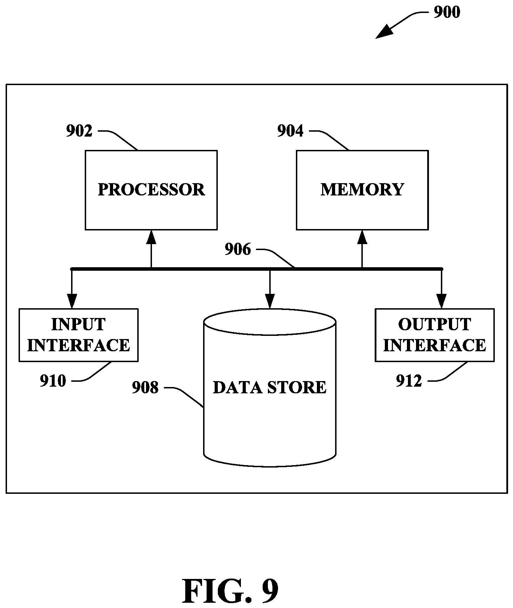

Referring now to Fig. 9, a high-level illustration of an exemplary computing device 900 is illustrated that can be used in accordance with the systems and methodologies disclosed herein. For instance, the computing device 900 may be or include the computing system 816. The computing device 900 includes at least one processor 902 that executes instructions that are stored in a memory 904. The instructions may be, for instance, instructions for implementing functionality described as being carried out by one or more modules, components, or systems discussed above or instructions for implementing one or more of the methods described above. The processor 902 may be a GPU, a plurality of GPUs, a CPU, a plurality of CPUs, a multi-core processor, a combination of the foregoing, etc. The processor 902 may access the memory 904 by way of a system bus 906. In addition to storing executable instructions, the memory 904 may also store radar data, beamformed radar data, neural network configurations, etc.

The computing device 900 additionally includes a data store 908 that is accessible by the processor 902 by way of the system bus 906. The data store 908 may include executable instructions, radar data, beamformed radar data, embeddings of these data in latent spaces, etc. The computing device 900 also includes an input interphase 910 that allows external devices to communicate with the computing device 900. For instance, the input interphase 910 may be used to receive instructions from an external computing device, etc. The computing device 900 also includes an output interphase 912 that interphases the computing device 900 with one or more external devices. For example, the computing device 900 may transmit control signals to the vehicle propulsion system 810, the braking system 812, and/or the steering system 814 by way of the output interphase 912.

Additionally, while illustrated as a single system, it is to be understood that the computing device 900 may be a distributed system. Thus, for instance, several devices may be in communication by way of a network connection and may collectively perform tasks described as being performed by the computing device 900.

Various functions described herein can be implemented in hardware, software, or any combination thereof. If implemented in software, the functions can be stored on or transmitted over as one or more instructions or code on a computer-readable medium. Computer-readable media includes computer-readable storage media. A computer-readable storage media can be any available storage media that can be accessed by a computer. By way of example, and not limitation, such computer-readable storage media can comprise RAM, ROM, EEPROM, CD-ROM or other optical disk storage, magnetic disk storage or other magnetic storage devices, or any other medium that can be used to store desired program code in the form of instructions or data structures and that can be accessed by a computer. Disk and disc, as used herein, include compact disc (CD), laser disc, optical disc, digital versatile disc (DVD), floppy disk, and Blu-ray disc (BD), where disks usually reproduce data magnetically and discs usually reproduce data optically with lasers. Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio and microwave are included in the definition of communication medium. Combinations of the above should also be included within the scope of computer-readable media.

Alternatively, or in addition, the functionally described herein can be performed, at least in part, by one or more hardware logic components. For example, and without limitation, illustrative types of hardware logic components that can be used include FPGAs, ASICs, Application-specific Standard Products (ASSPs), SOCs, Complex Programmable Logic Devices (CPLDs), etc.

Described herein are various technologies according to at least the following examples.

(A1) In an aspect, a method performed by a radar sensor system includes receiving radar sensor data from a radar sensor. The method further includes detecting static objects in the radar sensor data. The method also includes calculating cell parameters related to the static objects for a given radar cell, the cell parameters including a minimum residual velocity value for the given radar cell. Additionally, the method includes generating a two-dimensional (2D) cell map grid representing three-dimensional (3D) radar cells including the given radar cell. Furthermore, the method includes comparing the calculated cell parameters for the given radar cell to respective threshold values. The method also includes assigning weight scores to the cell parameters based on the threshold comparison. The method further includes summing the weight scores assigned to the cell parameters to generate a combined score. Additionally, the method includes comparing the combined score to a probability threshold. Moreover, the method includes outputting an indication that the cell is occupied or not occupied based on the comparison of the combined score to the probability threshold.

(A2) In some embodiments of the method of (A1), the method further includes performing egomotion compensation on the received radar sensor data prior to detecting the static objects.

(A3) In some embodiments of the method of at least one of (A1)-(A2), the method further includes calculating an average residual velocity of the static object detections in the given radar cell.

(A4) In some embodiments of the method of (A3), the method further includes calculating as a cell parameter a minimum residual velocity of a given static object detection in the given cell based on the average residual velocity and a detected residual velocity of the given static object.

(A5) In some embodiments of the method of at least one of (A1)-(A4), the cell parameters include one or more of: a number of static object detections in the given radar cell; a maximum signal-to-noise ratio for static objects in the given radar cell; a maximum radar cross section value for static objects in the given radar cell; or a minimum frame time for static object detections in the given radar cell.

(A6) In some embodiments of the method of at least one of (A1)-(A5), the method further includes outputting an indication that the cell is occupied when the combined score is greater than the probability threshold.

(A7) In some embodiments of the method of at least one of (A1)-(A6), the method IS performed on a frame-by-frame basis.

(B1) In another aspect, a radar system is configured to perform at least one of the methods disclosed herein (e.g., any of the methods of (A1)-(A7)).

(C1) In yet another aspect, a radar system includes a hardware logic component (e.g., circuitry), where the hardware logic component is configured to control elements of a radar system to perform at least one of the methods disclosed herein (e.g., any of the methods of (A1)-(A7)).

(D1) In yet another aspect, a radar system includes a radar sensor and circuitry configured to perform certain acts. The acts include receiving radar sensor data from the radar sensor. The acts further include detecting static objects in the radar sensor data. The acts also include calculating cell parameters related to the static objects for a given radar cell, the cell parameters including a minimum residual velocity value for a static object detection in the given radar cell. Additionally, the acts include generating a two-dimensional (2D) cell map grid representing 3D radar cells including the given radar cell. Moreover, the acts include comparing the calculated cell parameters for the given radar cell to respective threshold values. The acts further include assigning weight scores to the cell parameters based on the threshold comparison. The acts also include summing the weight scores assigned to the cell parameters to generate a combined score. Additionally, the acts include comparing the combined score to a probability threshold. Furthermore, the acts include outputting an indication that the cell is occupied or not occupied based on the comparison of the combined score to the probability threshold.

(D2) In some embodiments of the radar sensor system of (D1), the acts further include performing egomotion compensation on the received radar sensor data prior to detecting the static objects.

(D3) In some embodiments of the radar sensor system of any one of (D1)-(D2), the acts further include calculating an average residual velocity of the static object detections in the given radar cell.

(D4) In some embodiments of the radar sensor system of (D3), the acts further include calculating as a cell parameter the minimum residual velocity of the given static object detection in the given cell based on the average residual velocity and a detected residual velocity of the given static object.

(D5) In some embodiments of the radar sensor system of any one of (D1)-(D4), the cell parameters include one or more of: a number of static object detections in the given radar cell; a maximum signal-to-noise ratio for static objects in the given radar cell; a maximum radar cross section value for static objects in the given radar cell; or a minimum frame time for static object detections in the given radar cell.

(D6) In some embodiments of the radar sensor system of any one of (D1)-(D5), the acts further include outputting an indication that the cell is occupied when the combined score is greater than the probability threshold.

(D7) In some embodiments of the radar sensor system of any one of (D1)-(D6), the acts are performed on a frame-by-frame basis.

(E1) In another aspect, a radar analysis system includes one or more processors configured to perform acts comprising receiving radar sensor data from a radar sensor. The acts further include detecting static objects in the radar sensor data. The acts also include calculating cell parameters related to the static objects for a given radar cell, the cell parameters including a minimum residual velocity value for the given radar cell. Additionally, the acts include generating a two-dimensional (2D) cell map grid representing 3D radar cells including the given radar cell. Moreover, the acts include comparing the calculated cell parameters for the given radar cell to respective threshold values. The acts further include assigning weight scores to the cell parameters based on the threshold comparison. The acts also include summing the weight scores assigned to the cell parameters to generate a combined score. Furthermore, the acts include comparing the combined score to a probability threshold. Additionally, the acts include outputting an indication that the cell is occupied or not occupied based on the comparison of the combined score to the probability threshold.

(E2) In some embodiments of the central processing unit (E1), the acts further include performing egomotion compensation on the received radar sensor data prior to detecting the static objects.

(E3) In some embodiments of the central processing unit of at least one of (E1-E2), the acts further include calculating an average residual velocity of the static object detections in the given radar cell.

(E4) In some embodiments of the central processing unit of (E3), the acts further include calculating as a cell parameter a minimum residual velocity of a given static object detection in the given cell based on the average residual velocity and a detected residual velocity of the given static object.

(E5) In some embodiments of the central processing unit of at least one of (E1)-(E4), the cell parameters include one or more of: a number of static object detections in the given radar cell; a maximum signal-to-noise ratio for static objects in the given radar cell; a maximum radar cross section value for static objects in the given radar cell; or a minimum frame time for static object detections in the given radar cell.

(E6) In some embodiments of the central processing unit of at least one of (E1)-(E5), the acts further include outputting an indication that the cell is occupied when the combined score is greater than the probability threshold.

(F1) In still yet another aspect, use of any of the radar systems (e.g., any of (B 1), (C1), (D1)-(D7) or (E1-E6)) to detect and classify a target is contemplated.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the spirit and scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

**Claims**

1.  A method performed by a radar system, the method comprising:

    receiving radar sensor data from a radar sensor;
    detecting static objects in the radar sensor data;
    calculating cell parameters related to the static objects for a given radar cell, the cell parameters including a minimum residual velocity value for the given radar cell;
    generating a two-dimensional (2D) cell map grid representing three-dimensional (3D) radar cells including the given radar cell;
    comparing the calculated cell parameters for the given radar cell to respective threshold values;
    assigning weight scores to the cell parameters based on the threshold comparison;
    summing the weight scores assigned to the cell parameters to generate a combined score;
    comparing the combined score to a probability threshold; and
    outputting an indication that the cell is occupied or not occupied based on the comparison of the combined score to the probability threshold.

2.  The method of claim 1, further comprising performing egomotion compensation on the received radar sensor data prior to detecting the static objects.

3.  The method of any one of claims 1-2, further comprising calculating an average residual velocity of the static object detections in the given radar cell.

4. The method of claim 3, further comprising calculating as a cell parameter a minimum residual velocity of a given static object detection in the given cell based on the average residual velocity and a detected residual velocity of the given static object.

5. The method of any one of claims 1-4, wherein the cell parameters include one or more of:

   a number of static object detections in the given radar cell;
   a maximum signal-to-noise ratio for static objects in the given radar cell;
   a maximum radar cross section value for static objects in the given radar cell; or
   a minimum frame time for static object detections in the given radar cell.

6. The method of any one of claims 1-5, further comprising outputting an indication that the cell is occupied when the combined score is greater than the probability threshold.

7. The method of any one of claims 1-6, performed on a frame-by-frame basis.

8. A radar system comprising:

   a radar sensor; and
   circuitry configured to perform acts comprising:

      receiving radar sensor data from the radar sensor;
      detecting static objects in the radar sensor data;
      calculating cell parameters related to the static objects for a given radar cell, the cell parameters including a minimum residual velocity value for a static object detection in the given radar cell;
      generating a two-dimensional (2D) cell map grid representing 3D radar cells including the given radar cell;
      comparing the calculated cell parameters for the given radar cell to respective threshold values;
      assigning weight scores to the cell parameters based on the threshold comparison;
      summing the weight scores assigned to the cell parameters to generate a combined score;
      comparing the combined score to a probability threshold; and
      outputting an indication that the cell is occupied or not occupied based on the comparison of the combined score to the probability threshold.

9. The method of claim 8, further comprising performing egomotion compensation on the received radar sensor data prior to detecting the static objects.

10. The radar system of any one of claims 8-9, further comprising calculating an average residual velocity of the static object detections in the given radar cell.

11. The radar system of claim 10, further comprising calculating as a cell parameter the minimum residual velocity of the given static object detection in the given cell based on the average residual velocity and a detected residual velocity of the given static object.

12. The radar system of any one of claims 8-11, wherein the cell parameters include one or more of:

   a number of static object detections in the given radar cell;
   a maximum signal-to-noise ratio for static objects in the given radar cell;
   a maximum radar cross section value for static objects in the given radar cell; or
   a minimum frame time for static object detections in the given radar cell.

13. The radar system of any one of claims 8-12, further comprising outputting an indication that the cell is occupied when the combined score is greater than the probability threshold.

14. The radar system of any one of claims 8-13, performed on a frame-by-frame basis.

15. The radar system of any one of claims 8-14, employed in an autonomous vehicle.

**FIG. 1**

**FIG. 2**

FIG. 3

316 — CENTRAL UNIT / CPU

MEMORY

400

402 — POINT CLOUDS

404 — EGOMOTION COMPENSATION

406 — TRACKING/OBJECT DETECTION

408 — MOVING AND STATIC DETECTIONS

410 — AVERAGE VELORES CALCULATION

412 — MINIMUM VELORES CALCULATION

414 — GRID MAPPING

416 — CELL PARAMETER CACULATION

418 — COMPARATOR

420 — PROBABILITY THRESHOLD

422 — CELL STATUS

**FIG. 4**

**FIG. 5**

**FIG. 6**

EP 4 530 670 A1

702 — START

700

704 — DETECT MOVING AND STATIC OBJECTS

706 — CALCULATE VELOCITY RESIDUAL OF STATIC DETECTIONS

708 — CALCULATE MINIMUM VELOCITY RESIDUAL

710 — CALCULATE ADDITIONAL CELL PARAMETERS

712 — GENERATE MAP CELL GRID

714 — THRESHOLD AND WEIGHT CELL PARAMETERS

716 — COMBINE WEIGHTED PARAMETER SCORES

718 — COMBINED SCORE > THRESHOLD?

720 — OCCUPIED CELL

Y

N

722 — FREE CELL

724 — END

## FIG. 7

**FIG. 8**

900

902

PROCESSOR

904

MEMORY

906

INPUT
INTERFACE

910

908

DATA STORE

OUTPUT
INTERFACE

912

# FIG. 9

Europäisches
Patentamt

European
Patent Office

Office européen
des brevets

# EUROPEAN SEARCH REPORT

Application Number

EP 23 20 0857

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/353778 A1 (SLUTSKY MICHAEL [IL] ET AL) 21 November 2019 (2019-11-21) * abstract; figures 7, 8, 10 * * paragraphs [0024], [0030], [0031] * * paragraph [0052] – paragraph [0055] * * paragraphs [0058], [0060] * | 1-15 | INV. G01S13/536 G01S13/72 G01S13/89 G01S13/931 G01S7/02 |
| A | MAX PETER RONECKER ET AL: "Dual-Weight Particle Filter for Radar-Based Dynamic Bayesian Grid Maps", ARXIV.ORG, CORNELL UNIVERSITY LIBRARY, 201 OLIN LIBRARY CORNELL UNIVERSITY ITHACA, NY 14853, 20 March 2023 (2023-03-20), XP091464888, * figures 1, 2 * * chapter III * | 1-15 | ADD. G01S13/93 |

TECHNICAL FIELDS
SEARCHED      (IPC)

G01S

The present search report has been drawn up for all claims

| Place of search | Date of completion of the search | Examiner |
|---|---|---|
| Munich | 4 March 2024 | Knoll, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

...............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 0857

This annex lists the patent family members relating to the patent documents cited in the above-mentioned European search report.
The members are as contained in the European Patent Office EDP file on
The European Patent Office is in no way liable for these particulars which are merely given for the purpose of information.

04-03-2024

| Patent document cited in search report | Publication date | Patent family member(s) | Publication date |
|---|---|---|---|
| US 2019353778 A1 | 21-11-2019 | CN 110481559 A | 22-11-2019 |
| | | DE 102019111383 A1 | 21-11-2019 |
| | | US 2019353778 A1 | 21-11-2019 |

EPO FORM P0459

For more details about this annex : see Official Journal of the European Patent Office, No. 12/82